# EUROPEAN PATENT APPLICATION

(11) **EP 4 528 133 A1**
(43) Date of publication of application: **26.03.2025**
(21) Application number: 23382954.8
(22) Date of filing: 21.09.2023
(51) Int. Cl.: F16K 1/54, F16K 3/24, F16K 47/08

(54) **THROTTLE ELEMENT**

(71) Applicant: Ringo Válvulas S.L., 50720 Zaragoza (ES)
(72) Inventor: Argiles, Alberto, 50720 Zaragoza (ES); Gracia, Daniel, 50720 Zaragoza (ES); Galdeano, Diego, 50720 Zaragoza (ES)
(74) Representative: noventive Patentanwaltsgesellschaft mbH

(57) **Abstract**

The invention relates to a throttle element (9) for throttling a fluid flow for a valve (1), in particular for a control valve or a safety valve of a process plant. Furthermore, the invention relates to a valve (1) comprising said throttle element (9). The throttle element (9) according to the invention comprises at least one throttle inlet (91) and at least one throttle outlet (92), which are fluidly connected by at least one throttle channel (90), wherein the throttle channel (90) comprises several stages (A, B) through which the fluid is forced to flow from the at least one throttle inlet (91) to the least one throttle outlet (92). The several stages (A, B) comprise a reverse stage (A) which is configured in a way that along the reverse stage (A) the fluid is forced to reverse its flowing direction at least once to ensure a first pressure drop by converting energy of the fluid by means of friction, and a labyrinth stage (B) which is configured in a way that, in a separating area (c), the fluid is divided into several fluid paths (95) and in a collision area (d), downstream to the separating area (c), the fluid paths (95) are merged, wherein at least two of the fluid paths (95) are directed towards each other in a manner that the fluid flowing out of the respective fluid paths (95) collide in the collision area (d) thereby creating turbulence in the fluid.

## Description

The invention relates to a throttle element for throttling a fluid flow for a valve, in particular for a control valve or a safety valve of a process plant. Furthermore, the invention relates to a valve comprising said throttle element.

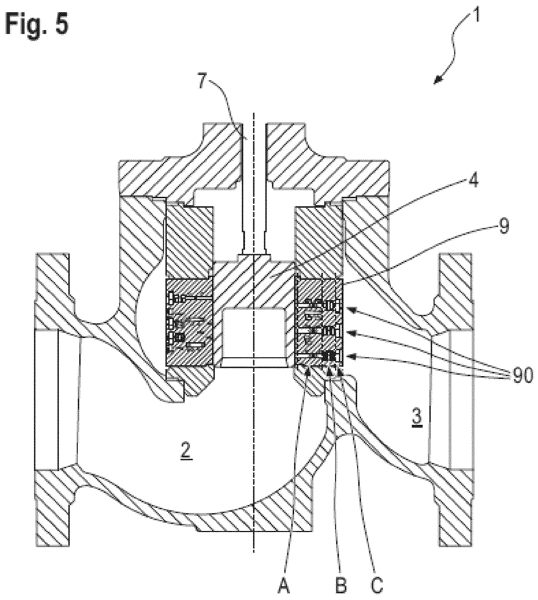

In many applications, as known from prior art, valves have throttling elements that can control/dampen a fluid flow through a throttling point of the valves. These throttle elements can be cage-like (e.g. hollow cylindrical) or gate-like (with parallel channel structures), depending on the place and application of use. A distinction is made between globe valves, as e.g. shown in Fig. 5 of the application, and axial valves, where movement of the actuator is essentially parallel (along an axis) to the main flow direction of the control valve. Both of these embodiments can be used with the throttling elements as described in this application.

Key problems of such throttle elements are stability, which can be negatively influenced mainly by abrasive effects due to the flowing fluid, and a noise development by the flowing fluid, which can be influenced by the geometry of the channel structures. Nevertheless, by the throttle elements, a throttle factor has to be established, which is mainly determined by the geometry of the channel structures.

From prior art, for throttle elements, different channel structures are known, each comprising different approaches to find the best possible solution (respectively trade-off) to the above mentioned issues.

In general, prior art throttle elements may be required to handle pressure drops over 300bar, which leads to excessive energy required to be dissipated in the material. Especially these throttle elements, due to the high pressure drop, have wear problems.

"Energy to be dissipated" is to be understood as converting kinetical energy and/or pressure of a fluid to turbulence and/or friction. Normally these valves having hard trim material, such as tungsten carbide, that helps to resist the wear of the high pressure drops.

To solve the above-mentioned problems, a throttle element and a valve comprising said throttle element according to the independent claims are provided. Advantageous embodiments of the invention are disclosed in the dependent claims.

The throttle element according to the invention for throttling a flow of a fluid for a valve, in particular for a control valve or a safety valve of a process plant, comprises at least one throttle inlet and at least one throttle outlet, which are fluidly connected by at least one throttle channel, wherein the throttle channel comprises several stages through which the fluid is forced to flow from the at least one throttle inlet to the least one throttle outlet. In the context of the application, a fluid is understood to be a gaseous or a liquid medium, which is throttled by the throttling element. The several stages comprise a reverse stage which is configured in a way that along the reverse stage the fluid is forced to reverse its flowing direction at least once to ensure a first pressure drop by converting energy of the fluid by means of friction, and a labyrinth stage which is configured in a way that, in a separating area, the fluid is divided into several fluid paths and in a collision area, downstream to the separating area, the fluid paths are merged, wherein at least two of the fluid paths are directed towards each other in a manner that the fluid flowing out of the respective fluid paths collide in the collision area thereby creating turbulence in the fluid. Preferably, the fluid paths have a rectangular cross section in the flow direction of the fluid passing through the fluid paths.

The fluid is provided at a principal channel of the reverse stage and preferably reaches the reverse stage first, so that the fluid is provided at the principal channel by the throttle inlet. In the reverse stage, the flow of the fluid is divided and forced to turn around and move in its opposite direction converging in an intermediate channel with preferably the same flow area as the principal channel. The process of reversing the flow of the fluid can be repeated as many times as needed. The goal of this reverse stage is to absorb the energy of a first pressure drop, especially for high pressure drop severe service valves. This absorption of energy can be understood as conversion of energy into heat by means of friction which is caused by the change of direction of the fluid flow.

There are some applications in the market that require liquid or gas valves to handle pressure drops over 300bar, which leads to excessive energy required to be dissipated in the material. Normally these valves are having hard trim material, such as tungsten carbide trims, that helps to resist the wear of the high pressure drop. With the claimed reversed stage, the dissipated energy for each reversed stage is equivalent to three or four pressure stages of the conventional multi-staged flow path, thereby using less space.

The labyrinth stage divides the flow in a separating area in several fluid paths that come back to an expansion volume in form of the collision area, creating a labyrinth effect that forces the flow jets leaving the fluid paths to hit each other and to further reduce their kinetic energy.

In summary, the throttle element with its different stages provides a space and cost efficient way of reducing the kinetic energy of the fluid flow. The configuration with at least one reverse stage and at least one labyrinth stage can be used for fluids which are liquid and/or gas.

In an advantageous embodiment of the invention, the labyrinth stage is positioned downstream of the reverse stage. Hence, the fluid flow firstly passes the reverse stage before it gets to the labyrinth stage. By this configuration, the behavior of the throttle element is optimized.

In another advantageous embodiment of the invention the throttle element further comprises a multi-channel stage, which is configured in a way that the fluid is divided into several channels, preferably leading to the at least one throttle outlet, thereby reducing the kinetic energy of the fluid, particularly when exiting the throttle element through the at least one throttle outlet.

Preferably, the multi-channel stage is positioned downstream of the labyrinth stage and/or comprises a first portion with at least one single chamber with a flow cross-section larger than said several channels.

By the above-mentioned configuration, the noise level is reduced. Furthermore, the peak frequency and/or the velocity of the fluid is reduced. In general, when the multi-channel stage leads to the at least one throttle outlet, the kinetic energy of said fluid is reduced as low as possible by the channels, which is advantageous.

In a further preferred embodiment of the invention, the reverse stage comprises at least one loop section downstream of a reverse area in the principal channel wherein the loop section is configured in a way that the flow of the fluid is reversed twice by flowing from the reverse area through at least one loop to a collecting area, wherein the reverse stage preferably comprises two of said loop sections with an intermediate channel connecting the loop sections and/or the at least one loop section preferably comprises two loops. As principal channel, a channel is to be understood in which the fluid is provided in the reverse stage. When the flow is reversed twice, it is firstly reversed so that the flow direction now is opposite to the original flow direction and secondly reversed in order to reobtain the original flow direction of the fluid.

In case the reverse stage is the first stage downstream of the throttle inlet, the throttle inlet merges into the principal channel. By the loop section the fluid flow is reversed twice which means, that it must change its flow direction twice by 180 degrees in order to result in the same flow direction in the end. By each loop, around 25 to 30 bar pressure can be absorbed, thus the embodiment described above provides an effective and space efficient way of absorbing energy from the fluid flow.

In a further preferred embodiment of the invention, the loop is configured in a way that the fluid is forced to change its flowing direction at least once by 180 degrees, and at least four times by 90 degrees. Said configuration brings an optimized trade-off of between material wear, pressure drop and manufacturing costs. For the same reason, the at least one loop preferably has a circular cross section.

In an advantageous embodiment of the invention, the ratio of a cross section area of the reverse area and a cross section area of the loop section lies within a range between 1,125 and 1,38 and preferably is 1,125. The cross section area of the loop section is formed by the sum of the cross section areas of each loop forming the loop section. Further advantageous is a design of the reverse area wherein the ratio of a cross section area of the intermediate channel and a cross section area of the loop section lies within a range between 1,125 and 1,38 and preferably is 1,125. The ratio of 1,125 has been identified as an optimum by computer simulations. However, acceptable results could be achieved by an enlargement of the ratio of up to 1,38, which corresponds to a maximum increase of the cross section area of the intermediate channel an maximum decrease of the cross section area of the loop section by 10%. In other words, the ratio of 1.125 is preferred, however it is acceptable for bigger valve sizes to have a up to 10% oversized ratio. The reason for only oversized ratios can be seen that energy should be dissipated by the turn effect of the loop and not by a reduction of the accessible area.

In an advantageous embodiment of the invention a cross section area of the intermediate channel and/or a section of the collecting area is equal to a cross section area of the reverse area in the principal channel. In another advantageous embodiment of the invention a cross section of the first loop section is equal to a cross section of the second loop section.

The above-described advantageous embodiments of the inventions result in an optimized trade-off of between material wear, pressure drop and manufacturing costs.

In a further advantageous embodiment of the invention, the labyrinth stage is configured in a way that the fluid is forced to change its flowing direction at least twice, firstly in a separating area, preferably by 90 degrees, to enter one of the fluid paths, and secondly in the fluid paths, preferably by 90 degrees, to enter the collision area. Said configuration establishes a pressure drop of around 20 bar, wherein the trade-off of between material wear, pressure drop and manufacturing costs is optimized. Preferably, the fluid paths are shaped angular in order to cause a sudden change of direction for the fluid flow. Consequently, the turbulences and the friction within the fluid can be maximized. Preferably, the fluid paths have a rectangular cross section. Further, the labyrinth stage comprises aat least three fluid paths.

Preferably, the throttle element is embodied as gate-type, wherein the at least one throttle inlet as well as the at least one throttle outlet are arranged on separate planes each, wherein the planes have a planar surface. Said configuration corresponds to a preferred embodiment of the invention.

Alternatively, the throttle element is embodied as hollow-cylindrical-type, which can also be described as cage-type, in the shape of a hollow cylinder with an inner and an outer mantle surface, wherein the at least one throttle inlet is arranged on one of the mantle surfaces of the hollow cylinder, preferably on the inner mantle surface, and the at least one throttle outlet is arranged on the other mantle surfaces of the hollow cylinder, preferably on the outer mantle surface. Said configuration corresponds to a preferred embodiment of the invention.

The valve according to the invention comprises an inlet chamber, an outlet chamber and a mechanism for allowing respectively restricting a fluid flow between the inlet chamber and the outlet chamber, wherein
the valve further comprises a throttle element according to the invention for throttling the flow through the mechanism between the inlet chamber and the outlet chamber.

In the following advantageous aspects and embodiments of the invention are described with respect to the enclosed figures. The figures show:
- Fig. 1: An isometric view showing a throttle element 9 according to the invention which is embodied as hollow-cylindrical-type respectively cage-type.
- Fig. 2: A cross-sectional view through the left area of the throttle element 9 as shown in Fig. 1.
- Fig. 3: An isometric view of the throttle element 9 according to fig. 2.
- Fig. 4a: A schematic cross-sectional view of a reverse stage A of a throttle element 9 according to the invention.
- Fig. 4b: A schematic cross-sectional view of a labyrinth stage B of a throttle element 9 according to the invention.
- Fig. 5: A cross-sectional view through a valve 1 with a throttle element 9 according to the invention.

The figures contain partially simplified, schematic representations. In part, identical reference signs are used for identical or possibly not identical elements. Different views of identical elements could be scaled differently. Directional indications such as "left", "right", "top" and "bottom" are to be understood with reference to the drawing plane of the respective figure and may vary in the individual representations with respect to the object depicted.

The expression "downstream" refers to the direction of flow of a fluid passing through the throttle from the throttle inlet to the restriction outlet. Consequently, if a second element is arranged downstream of a first element, the flow of the fluid passes the first element first and then the second element.

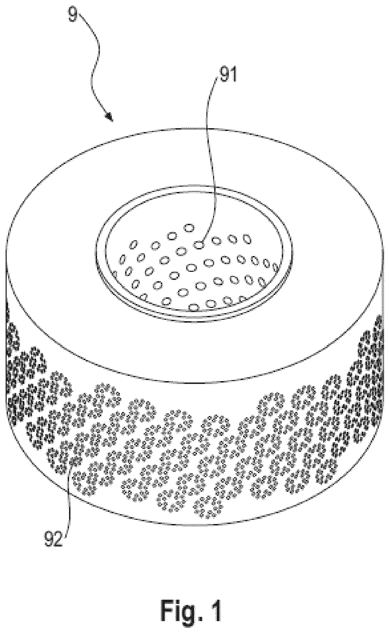

**Fig. 1** discloses an isometric view showing a throttle element 9 according to the invention, which is embodied as hollow-cylindrical-type respectively cage-type and therefore is shaped as a hollow cylinder. The throttle element 9 comprises several throttle inlets 91, which are arranged on the inside surface of the hollow cylinder and several throttle outlets 92, which are arranged on the outside surface of the hollow cylinder.

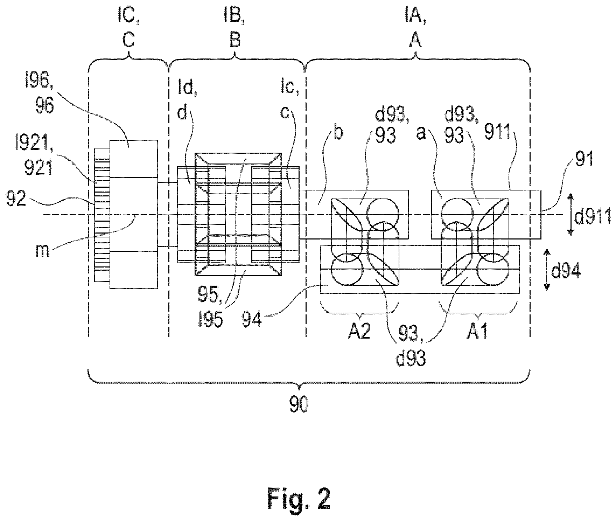

A fluid flow enters the throttle element 9 through the throttle inlets 91 is throttled by several stages inside of the throttle element 9, which are subject to the figures 2, 3, 4a and 4b and exits the throttle element 9 by the throttle outlets 92. Several throttle outlets 92 are connected fluidically to one throttle inlet 91 so that a fluid flow entering through one throttle inlet 91 is separated while flowing through the throttle element 9 and exits the throttle element 9 through several throttle outlets 92.

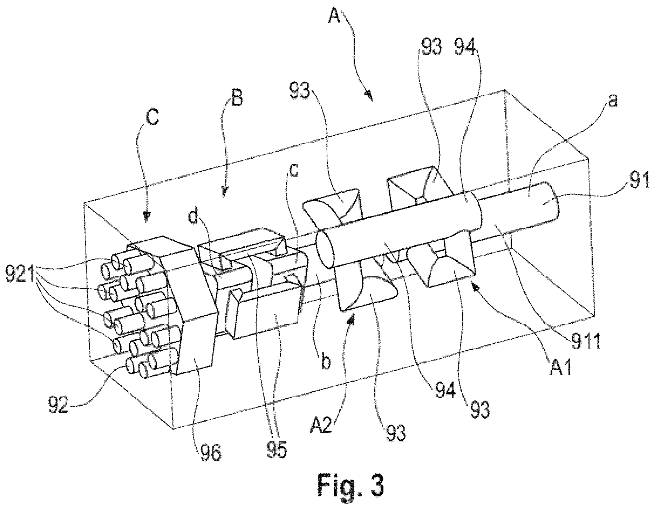

**Fig. 2** discloses a cross-sectional view through the left area of the throttle element 9 as shown in Fig. 1 and **Fig. 3** discloses the same embodiment in an isometric view. For the following description both figures are to be considered.

The throttle element 9 comprises different stages A, B, C, through which a throttle channel 90 is guided that connects the throttle inlet 91 and the throttle outlet 92. The throttle channel 90 comprises several connected sections, which define the different stages A, B, C. The stages A, B, C are arranged around a middle axis m that connects the throttle inlet 91 and the throttle outlet 92. In the shown embodiment, the first stage downstream of the throttle inlet 91 is a reverse stage A. The throttle inlet 91 merges to a principal channel 911 with a reverse area a. The reverse stage A comprises a first loop section A1 and a second loop section A2, both of which comprise two loops 93. Further, an intermediate channel 94 is provided to connect the two loop sections A1, A2 and provide the fluid flow from one loop section to another.

In the first loop section A1, two loops 93 fluidically connect the reverse area a in the principal channel 911 with the intermediate channel 94, whereas in the second loop section A2 two loops 93 fluidically connect the intermediate channel 94 with a collecting area b. Advantageously, as shown in the embodiment of fig. 2, the principal channel 911 and the collecting area b are aligned with the middle axis m whereas the intermediate channel 94 is arranged with an offset to the middle axis, so that the loops 93 guide the fluid radially away from the middle axis m. Advantageously, the principal channel 911 and the intermediate channel 94 have essentially identical cross sections and/or diameters d911, d94 Preferably, the cross sections of the principal channel 911 and the intermediate channel 94 are circular. In particular, the diameter (d911, d94) of the cross section of the principal channel 911 and/or the intermediate channel 94 amounts to a value between 3 mm and 6 mm, preferably between 4 mm and 5 mm and more preferably essentially 4,5 mm.

In both loop sections A1, A2 the fluid passing through these loop sections A1, A2 is forced to reverse its direction of flow twice. Flowing into the reverse area a from right to left, the fluid flows in the loops of the first loop section A1 partly from left to right and then is forced to flow into the intermediate channel 94 where the flow direction changes again, so that the fluid flows from right to left again. The same applies analogously to the second loop section A2.

The loops 93 are shaped angular with straight sections between corner, wherein each corner includes an angle of 90 degrees. By the relatively sharp angels of the loops 93 turbulences and thus high friction is evoked within the fluid and thus dissipating energy into heat, thus reducing the kinetic energy of the fluid. While flowing through the loops 93 the fluid flow has to change its direction twice by 180 degrees. The same applies to the second loop section A2. The loops 93 themselves have a circular cross section. In particular, a diameter d93 of the cross section for each loop 93 amounts to a value between 2 mm and 4 mm, preferably between 2,5 mm and 3,5 mmm and more preferably essentially 3 mm. Advantageously, a ratio between the diameter d3 of the loops 93 and the diameter d911, d94 of the principal channel 911 and/or the intermediate channel 94 amounts to 0,8, preferably 0,75 and more preferably 0,7, at most.

From the collecting area b, the fluid flowing through the throttle element 9 is passed to the second stage in form of a labyrinth stage B. The labyrinth stage B has a separating area c fluidically connected to the collecting area b of the reverse stage A and a collision area d. The separating area c and the collision area d are fluidically connected by fluid paths 95.

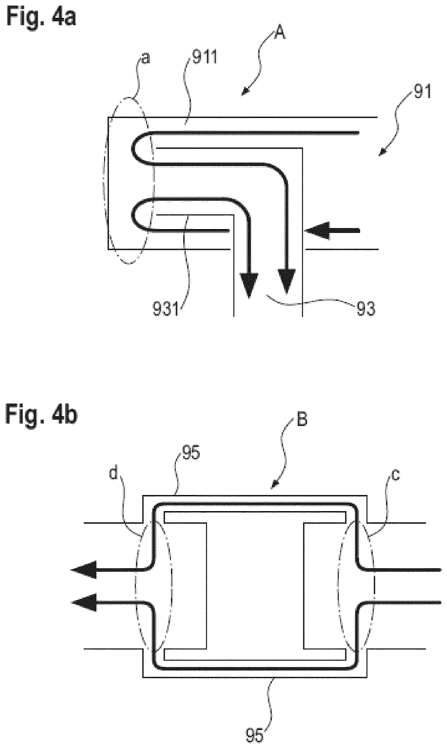

The separating area c and the collision area d are preferably shaped with a triangular cross section in the direction of the fluid flow. Consequently, three fluid paths 95 are provided to fluidically connect the separating area c and the collision area d, wherein the fluid paths 95 have a rectangular cross section. Other embodiments of the labyrinth stage B, especially the fluid paths 95, are conceivable as well, for example, wherein there are only two or more than three fluid path connecting the separating area c and the collision area d. Preferably, the fluid paths 95 are evenly distributed around a middle axis m of the throttle channel 90. By the configuration of the labyrinth stage B the fluid flow is separated and reunited and thereby dissipating kinetic energy. The labyrinth stage B and its mode of operation is described more precisely with respect to fig. 4b.

After the labyrinth stage B, the fluid passes on to the third stage in form of a multi-channel stage C. It comprises a chamber 96 in which the fluid flows from the collision area d of the labyrinth stage B. From there, the fluid is separated into several small channels 921, which form the throttle outlet 92. By the separation of the flow into the multitude of channels, the kinetic energy of the fluid is further reduced and the pressure further drops.

The several channels 921 of the multi-channel stage C each have a channel length I921 of at least 2 mm, preferably at least 2,5 mm and more preferably at least 3 mm. The maximum channel length I921 of the channels 921 of the multi-channel stage C is 10 mm, preferably 8 mm and more preferably 5 mm, at most.

The multi-channel stage C, which in particular includes the channel length I921, has a length of at least 5 mm, preferably at least 8 mm and more preferably at least 10 mm. The maximum channel length I921 of the multi-channel stage C is 20 mm, preferably 15 mm, at most. The channels 921 of the multi-channel stage C extend parallel to the middle axis m. Preferably, the multi-channel stage C is arranged symmetrical around the middle axis m.

The chamber 96 of the multi-channel stage C has a chamber length I96 and in particular extends parallel to the channels 921 and/or to the middle axis m. A ratio between the chamber length l96 of the chamber 96 of the multi-channel stage C and the channel length l921 of the channels 921 of the multi-channel stage C amounts to at least 1 and more preferably at least 1,2.

The labyrinth stage B has a labyrinth length lB of at least 8 mm, preferably at least 10 mm and more preferably at least 11 mm. The maximum labyrinth length lB of the labyrinth stage B is 20 mm, preferably 18 mm and more preferably 15 mm, at most. The labyrinth length lB of the labyrinth stage B extends parallel to the longitudinal extension of the middle axis m.

Preferably, the separating area c and the collision area d of the labyrinth stage B each have an essentially identical length. A separating length Ic of the separating area c and/or a collision length Id of the collision area d of the labyrinth stage B is at least 3 mm, preferably at least 4 mm and more preferably at least 4,5 mm. The maximum separating length Ic and/or collision length Id of the separating area c respectively the collision area d of the labyrinth stage B is 8 mm, preferably 7 mm and more preferably 6 mm, at most.

The fluid paths 95 of the labyrinth stage B each have a path length l95 of at least 5 mm, preferably at least 6 mm and more preferably at least 7 mm. The maximum path length l95 of the fluid paths 95 of the labyrinth stage B is 16 mm, preferably 14 mm and more preferably 12 mm, at most. A ratio between the path length l95 of the fluid paths 95 of the labyrinth stage B and the labyrinth length IB of the labyrinth stage B amounts to at least 0,6, preferably at least 0,7 and more preferably at least 0,8.

The reverse stage A has a reverse length lA of at least 14 mm, preferably at least 20 mm and more preferably at least 22 mm. The maximum reverse length lA of the reverse stage A is 30 mm, preferably 28 mm and more preferably 25 mm, at most. The reverse length IA of the reverse stage A extends parallel to the middle axis m.

Advantageously, a ratio between the reverse length IA of the reverse stage A and the labyrinth length IB of the labyrinth stage B amounts to a value between 1 and 3, preferably between 1,5 and 2,5 and more preferably between 2 and 2,2. Advantageously, a ratio between the reverse length IA of the reverse stage A and a multi-channel length IC of the multi-channel stage C amounts to a value between 1,5 and 3, preferably between 2 and 2,8 and more preferably between 2,2 and 2,5. Advantageously, a ratio between the labyrinth length IB of the labyrinth stage B and the multi-channel length IC of the multi-channel stage C amounts to a value between 0,5 and 2, preferably between 0,8 and 1,5 and more preferably between 1 and 1,2.

The indications made regarding the length of channels, stages or the like are made with respect to the flowing direction of the fluid passing through the respective element.

Fig. 4a discloses a detailed schematic cross-sectional view of a reverse stage A of a throttle element 9. Precisely, it shows the connection between a loop 93 of a loop section A1 with a reverse area a of a principal channel 911. The shown embodiment can be combined with the embodiment shown in figures 2 and 3 but does not necessarily have to be a part of this embodiment of the throttle element 9.

As in the embodiment of fig. 2 and 3 the reverse stage A in fig. 4a is also connected directly to the throttle inlet 91 of the throttle element 9. Thus, the fluid flows as indicated by the arrows in fig. 4a into a reverse area a of the principal channel 911. A connecting section 931 of the loop 93 extends inside the principal channel 911 and is arranged at least partly in parallel to the principal channel 911. In the reverse area the fluid hast to reverse its flow direction in order to enter the loop 93. Thereby, the fluid depletes part of its kinetic energy and is slowed down thus decreasing the pressure of the fluid.

In one embodiment, the loop 93 can have a further bend such as to direct the flow into the direction of the flow in the principal channel 911. In another embodiment, similar to the embodiment shown in fig. 2 and 3, the loop 93 can have a further bend such as to direct the flow in the opposite direction of the flow in the principal channel 911. The loop 93 can be connected to an intermediate channel 94 as in fig. 2 and 3 or directly to a different stage (for example a labyrinth stage B) of the throttle element 9.

When combining the embodiment of fig. 4a with the embodiment of figs. 2 and 3, the the fluid is first reversed by 180 degrees while flowing form the reverse area a into the connecting section 931 of the loop 93. Then it takes four turns of 90 degrees until it reaches the intermediate channel 94. In the intermediate channel 94 the outlet of the loop is preferably formed analogously to the inlet of the loop 93 formed by the shape and positioning of the connecting section 931. In such an embodiment, the fluid flow is further redirected by another 180 degrees and thus causing turbulences and friction within the fluid to lose kinetic energy and to decrease the pressure.

Further the shown configuration of the connection between the loop 93 and the principal channel 911 can also be applied to the loop 93 and the intermediate channel 94, both in the first loop section A1 and in the second loop section A2, wherever the loop is connected to a channel (including the collecting area b).

There are conceivable embodiments of the invention in which in the reverse area a, several connecting sections 931 of different loops 93 can be arranged. It is also possible to have one connecting section 931 for different loops 93 forming together one loop section A1, A2.

**Fig. 4b** discloses a schematic cross-sectional view of a labyrinth stage B of a throttle element 9 according to the invention. Other than in the embodiment of the labyrinth stage B shown in figs. 2 and 3, here the labyrinth stage B only comprises two fluid paths 95. The fluid is provided in the separating area c and divided into two fluid jets that flow into the fluid paths 95. These are arranged in a way that their inlet is directed in a 90 degree angle into the separating area c. Consequently, the fluid changes its direction by 90 degrees when flowing to the collision area d, which is arranged coaxial with the separating area c. This causes a labyrinth effect that goes along with friction and turbulences within the fluid and thus decreases its kinetic energy.

The fluid paths 95 are fluidically connected to the collision area d in a way that the fluid jets exiting the fluid paths 95 are directed towards each other and collide in the collision area d. Due to the collision the kinetic energy of the fluid is further decreased and converted into heat.

Thus, in an advantageous embodiment of the invention the stages A, B, C are provided with a cooling element in order to cool the respective channels, loops and areas where high heat is generated.

**Fig. 5** discloses a valve 1 in a crosssectional view comprising an inlet chamber 2, an outlet chamber 3 for a fluid and a mechanism for allowing and restricting a flow of the fluid between the inlet chamber 2 and the outlet chamber 3. The valve 1 further comprises a throttle element 9 according to the invention for throttling the fluid flow through the mechanism between the inlet chamber 2 and the outlet chamber 3. The throttle element 9 in this embodiment is provided as a hollow-cylindrical-type, like for example the embodiment described with respect to the figs. 1 to 3.

The throttle element 9 comprises multiple throttle channels 90 with different stages A, B, C as described with respect to the previous figures. The throttle channels 90 are arranged with an offset from each other so that the shown cross sections of each throttle channel 90 differ from each other.

The mechanism in this embodiment is provided by a piston 4, an actuating element 7, a throttle element 9. The mechanism itself with different types of throttle elements 9 is known from the state of the art and therefore not subject to further description.

### Reference sign list

- 1: valve
- 2: inlet chamber
- 3: outlet chamber
- 4: piston
- 7: actuating element
- 9: throttle element
- 90: throttle channel
- 91: throttle inlet
- 911: principal channel
- d911: diameter principal channel
- 92: throttle outlet
- 921: channel
- I921: channel length
- 93: loop
- d93: diameter loop
- 931: connecting section
- 94: intermediate channel
- d94: diameter intermediate channel
- 95: fluid path
- l95: path length
- 96: chamber
- l96: chamber length
- m: middle axis

- A: reverse stage
- IA: reverse length
- a: reverse area
- b: collecting area
- A1: first loop section
- A2: second loop section
- B: labyrinth stage
- IB: labyrinth length
- c: separating area
- Ic: separating length
- d: collision area
- Id: collision length

- C: multi-channel stage
- IC: multi-channel length

## Claims

1. Throttle element (9) for throttling a flow of a fluid for a valve (1), in particular for a control valve or a safety valve of a process plant, comprising
at least one throttle inlet (91) and at least one throttle outlet (92), which are fluidly connected by at least one throttle channel (90), wherein the throttle channel (90) comprises several stages (A, B) through which the fluid is forced to flow from the at least one throttle inlet (91) to the least one throttle outlet (92), wherein
the several stages (A, B) comprise
a reverse stage (A) which is configured in a way that along the reverse stage (A) the fluid is forced to reverse its flowing direction at least once to ensure a first pressure drop by converting energy of the fluid by means of friction, and
a labyrinth stage (B) which is configured in a way that, in a separating area (c), the fluid is divided into several fluid paths (95) and in a collision area (d), downstream to the separating area (c), the fluid paths (95) are merged, wherein at least two of the fluid paths (95) are directed towards each other in a manner that the fluid flowing out of the respective fluid paths (95) collide in the collision area (d) thereby creating turbulence in the fluid.

2. Throttle element (9) according to claim 1, wherein the labyrinth stage (B) is positioned downstream of the reverse stage (A).

3. Throttle element (9) according to one of claims 1 and 2,
wherein the throttle element (9) further comprises
a multi-channel stage (C) which is configured in a way that the fluid is divided into several channels (921), preferably leading to the at least one throttle outlet (92), and thereby reducing the kinetic energy of the fluid.

4. Throttle element (9) according to the preceding claim, wherein the multi-channel stage (C) is positioned downstream of the labyrinth stage (B), wherein the multi-channel stage (C) preferably comprises a first portion with at least one single chamber (96) with a flow cross-section larger than said several channels (921).

5. Throttle element (9) according to one of the preceding claims, wherein the reverse stage (A) comprises at least one loop section (A1, A2) downstream of a reverse area (a) in a principal channel (911) wherein the loop section (A1, A2) is configured in a way that the flow of the fluid is reversed twice by flowing from the reverse area (a) through at least one loop (93) to a first collecting area (b), wherein the reverse stage (A) preferably comprises two of said loop sections (A1, A2) with an intermediate channel (94) connecting the loop sections (A1, A2) and/or the at least one loop section (A1, A2) preferably comprises two loops (93).

6. Throttle element (9) according to the preceding claim, wherein the loop (93) is configured in a way that the fluid is forced to change its flowing direction at least one time by 180 degrees, and four times by 90 degrees.

7. Throttle element (9) according to one of the preceding claims 5 or 6, wherein the at least one loop (93) has a circular cross section.

8. Throttle element (9) according to one of the preceding claims 5 to 7, wherein the ratio of a cross section area of the reverse area (a) and a cross section area of the loop section (A1, A2) lies within a range between 1,125 and 1,38 and preferably is 1,125.

9. Throttle element (9) according to one of the preceding claims 5 to 8, wherein the ratio of a cross section area of the intermediate channel (94) and a cross section area of the loop section (A1, A2) lies within a range between 1,125 and 1,38 and preferably is 1,125.

10. Throttle element (9) according to one of the preceding claims 5 to 9, wherein a cross section area of the intermediate channel (94) and/or a section of the collecting area (b) is equal to a cross section area of the reverse area (a) in the principal channel (911).

11. Throttle element (9) according to one of the preceding claims 5 to 10, wherein a cross section of the first loop section (A1) is equal to a cross section of the second loop section (A2).

12. Throttle element (9) according to one of the preceding claims, wherein the labyrinth stage (B) is configured in a way that the fluid is forced to change its flowing direction at least twice, firstly in a separating area (c), preferably by 90 degrees, to enter one of the fluid paths (95), and secondly in the fluid paths (95), preferably by 90 degrees, to enter the collision area (d).

13. Throttle element (9) according to one of the preceding claims, wherein the throttle element (9) is embodied as gate-type, wherein the at least one throttle inlet (91) as well as the at least one throttle outlet (92) are arranged on separate planes each, wherein the planes have a planar surface.

14. Throttle element (9) according to one of the preceding claims 1 to 12, wherein the throttle element (9) is embodied as hollow-cylindrical-type respectively cage-type in the shape of a hollow cylinder with an inner and an outer mantle surface, wherein the at least one throttle inlet (91) is arranged on one of the mantle surfaces of the hollow cylinder, preferably on the inner mantle surface, and the at least one throttle outlet (92) is arranged on the other mantle surfaces of the hollow cylinder, preferably on the outer mantle surface.

15. Valve (1) comprising an inlet chamber (2), an outlet chamber (3) and a mechanism (4, 7, 9, 10, 11) for allowing and/or(?) restricting a fluid flow between the inlet chamber (2) and the outlet chamber (3), wherein
the valve (1) comprises a throttle element (9) according to one of claims 1 to 14 for throttling the fluid flow through the mechanism between the inlet chamber (2) and the outlet chamber (3).

## Amended claims

### Amended claims in accordance with Rule 137(2) EPC.

1. Throttle element (9) for throttling a flow of a fluid for a valve (1), in particular for a control valve or a safety valve of a process plant, comprising
at least one throttle inlet (91) and at least one throttle outlet (92), which are fluidly connected by at least one throttle channel (90), wherein the throttle channel (90) comprises several stages (A, B) through which the fluid is forced to flow from the at least one throttle inlet (91) to the least one throttle outlet (92), wherein
the several stages (A, B) comprise
a reverse stage (A) which is configured in a way that along the reverse stage (A) the fluid is forced to reverse its flowing direction at least once to ensure a first pressure drop by converting energy of the fluid by means of friction, and **characterized by**
a labyrinth stage (B) which is configured in a way that, in a separating area (c), the fluid is divided into several fluid paths (95) and in a collision area (d), downstream to the separating area (c), the fluid paths (95) are merged, wherein at least two of the fluid paths (95) are directed towards each other in a manner that the fluid flowing out of the respective fluid paths (95) collide in the collision area (d) thereby creating turbulence in the fluid and wherein the fluid paths (95) are evenly distributed around a middle axis (m) of the throttle channel (90).

2. Throttle element (9) according to claim 1, wherein the labyrinth stage (B) is positioned downstream of the reverse stage (A).

3. Throttle element (9) according to one of claims 1 and 2,
wherein the throttle element (9) further comprises
a multi-channel stage (C) which is configured in a way that the fluid is divided into several channels (921), preferably leading to the at least one throttle outlet (92), and thereby reducing the kinetic energy of the fluid.

4. Throttle element (9) according to the preceding claim, wherein the multi-channel stage (C) is positioned downstream of the labyrinth stage (B), wherein the multi-channel stage (C) preferably comprises a first portion with at least one single chamber (96) with a flow cross-section larger than said several channels (921).

5. Throttle element (9) according to one of the preceding claims, wherein the reverse stage (A) comprises at least one loop section (A1, A2) downstream of a reverse area (a) in a principal channel (911) wherein the loop section (A1, A2) is configured in a way that the flow of the fluid is reversed twice by flowing from the reverse area (a) through at least one loop (93) to a first collecting area (b), wherein the reverse stage (A) preferably comprises two of said loop sections (A1, A2) with an intermediate channel (94) connecting the loop sections (A1, A2) and/or the at least one loop section (A1, A2) preferably comprises two loops (93).

6. Throttle element (9) according to the preceding claim, wherein the loop (93) is configured in a way that the fluid is forced to change its flowing direction at least one time by 180 degrees, and four times by 90 degrees.

7. Throttle element (9) according to one of the preceding claims 5 or 6, wherein the at least one loop (93) has a circular cross section.

8. Throttle element (9) according to one of the preceding claims 5 to 7, wherein the ratio of a cross section area of the reverse area (a) and a cross section area of the loop section (A1, A2) lies within a range between 1,125 and 1,38 and preferably is 1,125.

9. Throttle element (9) according to one of the preceding claims 5 to 8, wherein the ratio of a cross section area of the intermediate channel (94) and a cross section area of the loop section (A1, A2) lies within a range between 1,125 and 1,38 and preferably is 1,125.

10. Throttle element (9) according to one of the preceding claims 5 to 9, wherein a cross section area of the intermediate channel (94) and/or a section of the collecting area (b) is equal to a cross section area of the reverse area (a) in the principal channel (911).

11. Throttle element (9) according to one of the preceding claims 5 to 10, wherein a cross section of the first loop section (A1) is equal to a cross section of the second loop section (A2).

12. Throttle element (9) according to one of the preceding claims, wherein the labyrinth stage (B) is configured in a way that the fluid is forced to change its flowing direction at least twice, firstly in a separating area (c), preferably by 90 degrees, to enter one of the fluid paths (95), and secondly in the fluid paths (95), preferably by 90 degrees, to enter the collision area (d).

13. Throttle element (9) according to one of the preceding claims, wherein the throttle element (9) is embodied as gate-type, wherein the at least one throttle inlet (91) as well as the at least one throttle outlet (92) are arranged on separate planes each, wherein the planes have a planar surface.

14. Throttle element (9) according to one of the preceding claims 1 to 12, wherein the throttle element (9) is embodied as hollow-cylindrical-type respectively cage-type in the shape of a hollow cylinder with an inner and an outer mantle surface, wherein the at least one throttle inlet (91) is arranged on one of the mantle surfaces of the hollow cylinder, preferably on the inner mantle surface, and the at least one throttle outlet (92) is arranged on the other mantle surfaces of the hollow cylinder, preferably on the outer mantle surface.

15. Valve (1) comprising an inlet chamber (2), an outlet chamber (3) and a mechanism (4, 7, 9) for allowing and/or restricting a fluid flow between the inlet chamber (2) and the outlet chamber (3), wherein
the valve (1) comprises a throttle element (9) according to one of claims 1 to 14 for throttling the fluid flow through the mechanism between the inlet chamber (2) and the outlet chamber (3).
